Europäisches Patentamt

European Patent Office

Office européen des brevets

(19)

(11) Publication number: **0 084 589**
**A2**

(12) # EUROPEAN PATENT APPLICATION

(21) Application number: 82104882.4

(22) Date of filing: 03.06.82

(51) Int. Cl.³: **F 16 L 27/04, F 01 N 7/18**

(30) Priority: 26.01.82 IT 720282

(43) Date of publication of application: 03.08.83
Bulletin 83/31

(84) Designated Contracting States: **AT BE CH DE FR GB IT LI LU NL SE**

(71) Applicant: **S.I.E.T.T.E. S.p.A. Divisione IAO Industrie Riunite, Via S. Lorenzo 141, I-20020 Lazzate Milano (IT)**

(72) Inventor: **Saia, Alfredo, Descam Via S. Lorenzo, 141, I-20020 Lazzate, Milano (IT)**
Inventor: **Marzorati, Attilio, Descam Via S. Lorenzo, 141, I-20020 Lazzate Milano (IT)**

(74) Representative: **Riccardi, Sergio, Riccardi & Co. Via Macedonio Melloni, 32, I-20129 Milano (IT)**

(54) **System for absorbing vibrations of exhaust lines of motor vehicles.**

(57) The invention relates to a system for absorbing the vibrations of the exhaust lines, developing from internal combustion engines for motor vehicles, allowing to prevent transmission of the vibration, to the rest of the exhaust line, to its supports and to the vehicle chassis. This system is based on employing single or double joints, whose action is integrated by springs recovering the optimal position of the exhaust line.

EP 0 084 589 A2

- 1 -

"System for absorbing vibrations of exhaust lines of motor vehicles"

The present invention relates to a system for absorbing vibrations developed by internal combustion engines, preventing transmission of said vibrations along the exhaust line, so as to avoid that they endamage the exhaust line and are transferred through the line supports to the vehicle chassis.

The problem of vibrations along the exhaust line of motor vehicles has always been one of difficult solution, and every user knows very well that the exhaust line is one of the most exposed or even the most exposed element of the vehicle, to wear, failure, detachment, so as to require frequent and expensive repairs.

It had already attempted to solve this problem, but only for the motor vehicles with transversally arranged engine, by providing a flexible pipe length in the zone between the engine exhaust manifold and the central muffler, but the metal flexible pipes have neither sufficient elasticity nor sufficient strength to be able to overcome the continuos strains imposed by the engine vibrations.

It was also tried to solve partially the problem by providing on the exhaust line a simple ball and socket joint, but also this attempt revealed to be insufficient as it could not respond with enough speed and elasticity to the frequence of the vibrations developed by the engine.

The problem is solved by the system of the present invention, in which two parts of the exhaust line, in any point of the exhaust manifold and duct ahead of the central silencer, are mutually connected through one or two ball joints, whose action is integrated by springs for recovery of the optimal position of the exhaust line.

This system allows a complete absorbtion of either flexural or torsional vibrations and has also the advantage of being always operative, even in case a spring is broken the joint is always holding on, also in view of the higher quality of the material employed.

These and other objects, features and advantages of the system according to the present invention will in any case become clear and apparent from the following detailed description of some preferred embodiments, given as a non limiting example only, and with reference to the accompanying sheets of illustrative drawings, in which:

Fig. 1 is a longitudinal sectional view of a first embodiment of the system according to the present invention with ball joint and helical compression spring;

Fig. 2 is a longitudinal sectional view of a second embodiment of the system with ball joint and cylindrical tension springs;

Fig. 3 is a longitudinal sectional view of a third embodiment of the system, with two coupled ball joints of the type shown in Fig. 2;

Fig. 4 is a front view of the embodiment shown in Fig. 1; and

Fig. 5 is a front view of the embodiment shown in Fig. 2.

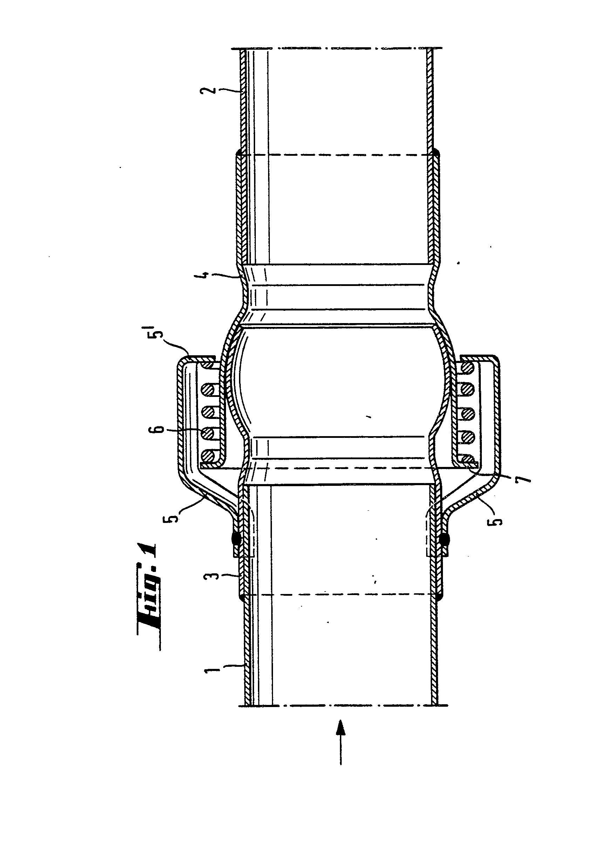

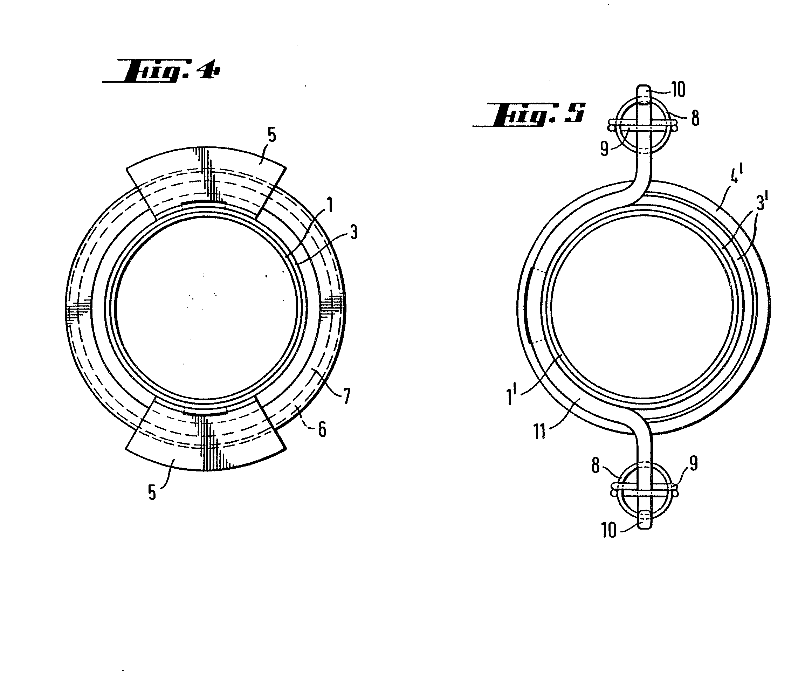

With reference now first to Figs. 1 and 4 of the accompanying drawings, a first embodiment of the system according to the present invention is shown, in which the two pipe hengths 1 and 2 of the exhaust line are joined by the universal ball joint consisting of the inner or inserted socket 3, joined to the pipe 1 upstream the joint, and the outer receiving socket 4, joined to the pipe 2 downstream of it, said joints being preferably carried out by welding or upsetting.

On the inner socket 3 circular sectors 5 are fixed, preferably by welding, forming at their opposite and a shoulder 5' for the helical compression spring 6, whose other end leans on the stop edge 7 made on the end of the outer socket 4.

It is clear that at each strain or vibration, either flexural or torsional, the ball joint rotates and the spring compensates the movement and balances again the connection between pipes.

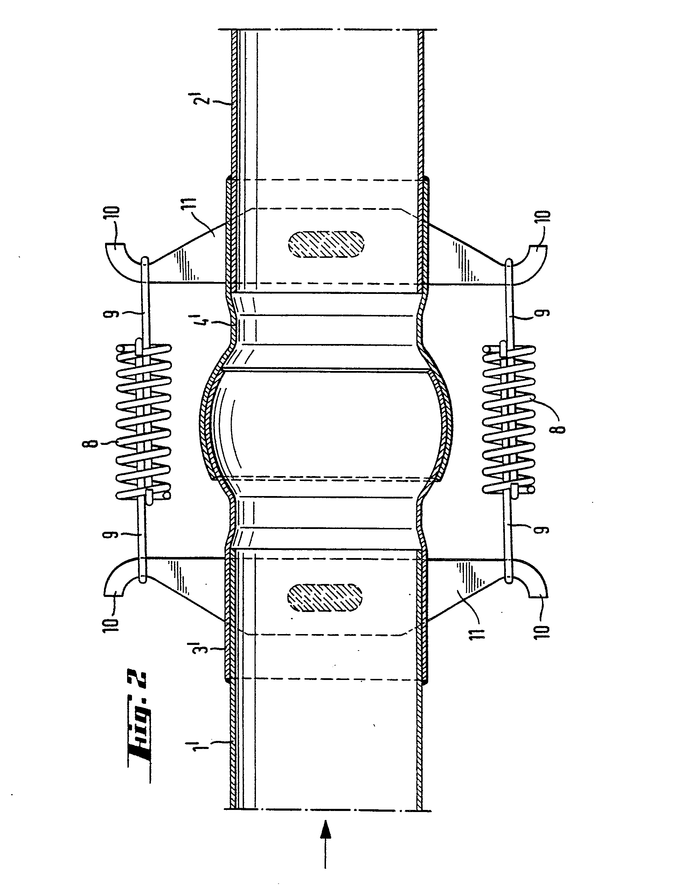

The same effect is obtained with the embodiment shown in Figs. 2 and 5, in which there are again two parts 1' and 2' of the exhaust line, connected by the universal ball joint, still consisting of the inner socket 3' and the outer socket 4' but in this case the two cylindrical torsion springs 8 are attached by tie-rods 9 to hooks 10 at the end of two brackets 11, each being fixed to one end of the joint. Also here the springs compensate and recover the joint movements, and may be arranged in any plane passing through the joint longitudinal axis, but preferably along the horizontal or vertical plane.

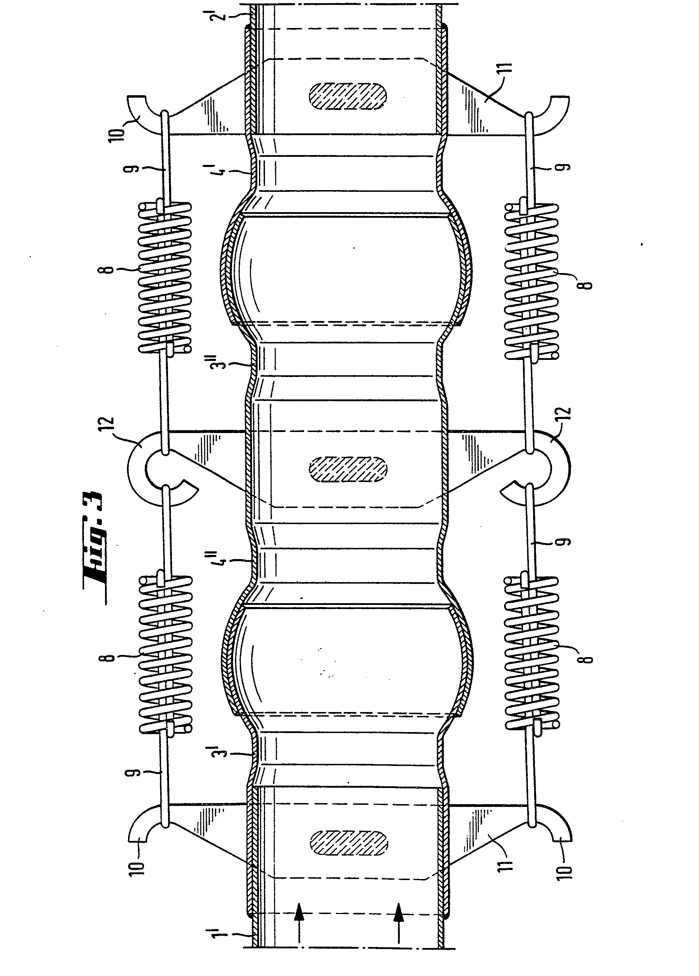

At last still a more complete effect of absorption of the vibration is obtained by the embodiment of Fig. 3, in which two similar joints, of the type shown in Figs. 2 and 5, are series connected with the outer socket 4" of the first joint upstream extending so as to contemporaneously form the inner socket 3" of the second joint downstream, and the two spring pairs 8 are coupled at the center of the same bracket with central hook 12.

From the foregoing and from the drawings it is thus clear that the system according to the present invention fully meets the objects and advantages set forth, and it is also to be understood that many modifications, additions, variants and substitutions for elements may be resorted to this system, without departing however from its protective scope also defined by the accompanying claims.

## CLAIMS

1) System for absorbing the vibrations of exhaust lines of motor vehicles, characterized by the fact that two parts of the exhaust line, in any point of the exhaust manifold and duct but ahead of the central silencer, are mutually joined by one or two ball joints, whose action is integrated by springs to recover the optimal positions of the exhaust line.

2) System according to Claim 1, characterized by the fact that the ball joint is of the universal type with inner socket, joined to the upstream pipe length, and outer socket, joined to the upstream pipe length.

3) System accordind to Claim 1, characterized by the fact the joint has a compression helical spring, arranged between a stop edge of the outer socket and a shoulder seat formed by circular sectors fixed to the inner socket.

4) System according to Claim 2, characterized by the fact the joint is provided with a couple of cylindrical tension springs, attached at the two ends to brackets at the two ends of the joint.

5) System according to Claim 1, characterized by the fact that the connection of exhaust line lengths is carried out by two series connected ball joints, each joint being provided with a relevant couple of cylindrical springs, both attached at the centre through a single central hook-shaped bracket.

6) System according to one or more of the preceding claims, characterized by the fact that the connection between sockets of the ball joint and the relevant exhaust line pipe lengths, is effected by means of welding or upsetting.

**Fig. 1**

0084589

Fig. 2

2/4

0084589

_Fig. 3_

3/4

0084589

**Fig. 4**

5

1

3

7

6

5

5

**Fig. 5**

10

8

9

4'

3'

1'

11

8

9

10

4/4

0084589